Europäisches Patentamt

European Patent Office

Office européen des brevets

(11) Veröffentlichungsnummer: **0 251 075 B1**

# EUROPÄISCHE PATENTSCHRIFT

(45) Veröffentlichungstag der Patentschrift: 24.04.91

(51) Int. Cl.⁵: **F16K 31/08, F16K 31/06**

(21) Anmeldenummer: 87108825.8

(22) Anmeldetag: **19.06.87**

(54) **Magnetventil für flüssige und gasförmige Medien.**

(30) Priorität: 21.06.86 DE 3620818

(43) Veröffentlichungstag der Anmeldung:
07.01.88 Patentblatt 88/01

(45) Bekanntmachung des Hinweises auf die
Patenterteilung:
24.04.91 Patentblatt 91/17

(84) Benannte Vertragsstaaten:
DE FR GB IT

(56) Entgegenhaltungen:
EP-A- 0 147 562          DE-A- 2 101 268
DE-A- 2 826 212          DE-B- 1 282 386
US-A- 2 905 195          US-A- 3 452 780

(73) Patentinhaber: ASYS GmbH, Gesellschaft für
die Herstellung und den Vertrieb von Systemen für die Automatisierung
Justinus-Kerner-Weg 24
W-7060 Schorndorf(DE)

(72) Erfinder: Hügler, Klaus, Dipl.-Ing.
Justinus-Kerner-Weg 24
W-7060 Schorndorf(DE)

(74) Vertreter: Patentanwälte Phys. Bartels
Dipl.-Ing. Fink Dr.-Ing. Held
Lange Strasse 51
W-7000 Stuttgart 1(DE)

## Beschreibung

Die Erfindung betrifft ein Magnetventil für flüssige und gasförmige Medien, das die Merkmale des Oberbegriffs des Anspruches 1 aufweist.

Bei dem Versuch, die Abmessungen der bekannten Magnetventile dieser Art zu verringern, stößt man sehr rasch an eine Grenze, von der an sich insbesondere die erforderlichen geringen Fertigungstoleranzen nicht mehr einhalten lassen. Die Bemühungen um eine Miniaturisierung wurden deshalb auf Ventile mit einem Steuerkolben gerichtet. Aber auch hier sind die Abmessungen, welche im Hinblick auf die schwierige Bearbeitung und die einzuhaltenden Fertigungstoleranzen nicht unterschritten werden können, noch relativ groß.

Letzteres gilt auch für ein Magnetventil der eingangs genannten Art (US-A-2,905,195) , bei dem der Flachschieber an einer Parallelogrammführung aufgehängt ist, durch welche die zu bewegende Masse ein Mehrfaches der Masse des Flachschiebers beträgt. Zu relativ großen Abmessungen des für die Betätigung des Flachschiebers vorgesehenen Elektromagneten trägt ferner ein verhältnismäßig großer Verschiebeweg des Flachschiebers bei, der einen entsprechend großen maximalen Arbeitsluftspalt des Magnetsystems bedingt. Der Verschiebeweg des Flachschiebers von der einen in die andere Endstellung ist nämlich größer als der Durchmesser der als Bohrungen ausgeführten Steueröffnungen in den Gleitflächen. Bei einer Verwendung als Regelventil ist außerdem von Nachteil, daß der Flachschieber aus seinen Endstellungen heraus zunächst einen Verschiebeweg, der etwa gleich dem Durchmesser der Steuerbohrungen ist, zurücklegen muß, ehe eine der beiden den Flachschieber durchdringenden Bohrungen auf eine freizugebende Steueröffnung trifft, wobei deren freie Querschnittsfläche nicht linear mit dem Verschiebeweg des Flachschiebers zunimmt.

Der Erfindung liegt die Aufgabe zugrunde, ein schnellschaltendes, reibungsarmes Magnetventil zu schaffen, das eine weitergehende Miniaturisierung, als sie bisher erreichbar war, ermöglicht und dennoch eine einfache Anpassung an unterschiedliche Anforderungen erlaubt. Diese Aufgabe löst ein Magnetventil mit den Merkmalen des Anspruches 1.

Durch die erfindungsgemäße Form der Steueröffnungen sowie der Steuerkanten läßt sich bei vorgegebener Fläche der Steueröffnungen ein minimaler Verschiebeweg des Flachschiebers erreichen, wodurch sich eine entsprechende Reduzierung der Größe des für die Verschiebung des Flachschiebers erforderlichen Magnetsystems erreichen läßt. Die Form der Steueröffnungen und der Steuerkanten ermöglicht ferner die Einhaltung sehr enger Toleranzen selbst bei sehr kleinen Abmessungen, was ebenfalls für die Miniaturisierung von großer Bedeutung ist. Weiterhin ist die vom Magnetsystem zu bewegende Masse sehr klein, da sie nur aus der sehr geringen Masse des Flachschiebers besteht, weil dieser keine sich zusammen mit ihm bewegende Führungseinrichtung benötigt.

Da wie bei dem bekamiteu Ventil (US-A-2905 195) beide Gleitflächen mit Steueröffnungen versehen sind und beide Stirnflächen des Flachschiebers Verschlußflächen für diese Steueröffnungen aufweisen, ist die Reibung, welche der Flachschieber bei einer Bewegung überwinden muß, gering, weil sich auf beiden Schieberseiten eine Lagerung durch das zu steuernde Medium bilden kann. Vorzugsweise wird dabei die Ausbildung und Anordnung der Steueröffnungen in den beiden Gleitflächen so gewählt, daß sich gleiche hydraulische Kräfte auf beiden Stirnseiten des Flachschiebers ergeben. Diese vollständige Kompensation der hydraulischen Kräfte ergibt eine minimale Reibung und damit einen minimalen Verschleiß. Da' keine Weichdichtungen erforderlich, sondern auschießlich metallische Spaltdichtungen vorhanden sind, lassen sich in den Bereich von Milliarden gehenden Schaltspiele erreichen, wie sie für einen quasistetigen Betrieb notwendig sind, in dem der Flachschieber Schwingbewegungen ausführt. Zu der Reduzierung der Reibung auf einen äußerst geringen Wert, der insbesondere bei stetigen Ventilen aus Hysteresegründen wichtig ist, tragen auch die sehr geringen Massenkräfte bei, die sich mit dem erfindungsgemäßen Flachschieber erreichen lassen.

Das erfindungsgemäße Magnetventil läßt sich als stetiges, quasistetiges, monostabiles, bistabiles und tristabiles Ventil ausbilden. Das Ventil läßt sich deshalb nicht nur mit zwei oder drei Schaltstellungen betreiben. Vielmehr kann der Flachschieber auch beliebige Zwischenstellungen zwischen seinen Endstellungen einnehmen, wie sie zum Beispiel für eine stetige und quasi-stetige Betriebsweise erforderlich sind. Schließlich läßt sich das erfindungsgemäße Magnetventil nicht nur als Dreiwegeventil, sondern auch als Vierwege- und Fünfwege-Ventil ausführen. Dank der kurzen Schaltzeiten, des kleinen Hubes und der geringen trägen Masse, welche sich mit dem erfindungsgemäßen Magnetventil realisieren lassen, kommt für die Ventilansteuerung auch eine Modulation der Frequenz und/oder der Amplitude und/oder des Tastverhältnisses der elektrischen Ansteuersignale in Frage, so daß auch eine quasi -stetige Regelung möglich ist. Bei stetiger und quasi-stetiger Wirkungsweise werden bezüglich der Lage der Steuerkanten relativ zueinander Toleranzen im Bereich von wenigen Tausendstel Millimeter gefordert. Das hier deswegen bei den bekannten Ventilen mit langgestrecktem Kolbenschieber erforderliche teure Einschleifen von Ringnuten und das aufwendige Innenläppen von Buchsen läßt sich bei der erfindungsgemäßen Lösung durch das wesentlich billigere Rundschleifen sowie das Außenläppen von Platten ersetzen.

Vorzugsweise hat der Flachschieber die Form eines innen und außen kreiszylindrischen Rohres oder Ringes. Hierdurch wird nicht nur gegenüber einer Scheibe die Masse verringert, was für kleine, schnelle Schaltventile vorteilhaft ist. Man kann außerdem den Innenraum des Flachschiebers als Verbindungskanal zwischen den beiden Ventilplatten verwenden, wodurch sich das Kanalsystem wesentlich vereinfachen läßt, was sowohl zu geringeren Kosten als auch zu geringeren Abmessungen des Ventiles führt. Ein Flachschieber in Form eines Rohres oder Ringes ermöglicht ferner mit relativ geringem Aufwand sowohl eine innere als auch eine äußere Steuerkante mit sehr hoher Genauigkeit hinsichtlich Lage und Abstand zu realisieren. Dadurch läßt sich ein toter Gang vermeiden und eine strenge Linearität zwischen Verschiebung und Öffnungsgrad erreichen, was für stetige Ventile, beispielsweise Servoventile, besonders wichtig ist.

Vorteilhafterweise besteht der Flachschieber aus wenigstens zwei koaxial ineinander greifende Hülsen. Der Flachschieber läßt sich dann noch besser als bei einer einstückigen Ausbildung an unterschiedliche Anforderungen anpassen.

Gleiche hydraulische Kräfte auf beiden Stirnseiten des Flachschiebers lassen sich in einfacher Weise mit baugleichen Gleitplatten erreichen, die auch aus Fertigungsgründen vorteilhaft sind.

Die mit dem Flachschieber zusammenwirkenden Gleitflächen können durch die Flächen von plattenförmigen Körpern gebildet sein. Vorzugsweise weisen jedoch die beiden Ventilplatten Buchsen auf, die in Trägerplatten eingesetzt sind und mit ihrer einen Stirnfläche mindestens teilweise die eine beziehungsweise andere Gleitfläche bilden. Mittels derartiger Buchsen lassen sich nämlich in besonders kostengünstiger Weise die Steueröffnungen mit sehr großer Genauigkeit realisieren. Bei einer bevorzugten Ausführungsform sind deshalb zwei gleichachsig in je einer kreiszylindrischen Bohrung der einen beziehungsweise anderen Ventilplatte angeordnete, kreiszylindrische Schlitzbuchsen gemäß Anspruch 9 vorgesehen. Jede dieser Schlitzbuchsen weist vorzugsweise zwei diametral angeordnete, gleich ausgebildete Schlitze auf, was auch aus Fertigungsgründen vorteilhaft ist.

Die Steuerschlitze der Schlitzbuchsen sind innen vorzugsweise durch die Außenmantelfläche einer in die Schlitzbuchse eingesetzten Steuerbuchse gemäß Anspruch 13 verschlossen .Die die Lage der Steuerkanten der Steueröffnungen in den Gleitflächen bestimmenden Durchmesser der Buchsen können ebenso wie die die Steuerkanten des Flachschiebers bestimmenden Durchmesser mit relativ geringem Aufwand so genau festgelegt werden, daß sich ein sogenannter Nullschnitt erreichen läßt, das heißt, daß weder eine Überdeckung noch eine Unterdeckung vorhanden ist.

Mittels einer den ringförmigen Flachschieber durchdringenden und in die beiden Ventilplatten eingreifenden Schenkelfeder gemäß Anspruch 14 läßt sich in einfacher Weise und mit hoher Genauigkeit der Flachschieber in einer Ruhestellung halten und nach einer Auslenkung in die Ruhestellung zurückführen. Die vorzugsweise als U-oder Z-Feder ausgebildete Schenkelfeder liegt vorzugsweise mit ihren beiden Schenkeln an einer kreis zylindrischen Innenfläche des Flachschiebers an. Der Flachschieber hat dadurch die Möglichkeit, sich relativ zur Schenkelfeder zu verdrehen, was im Hinblick auf eine Selbstnachstellung und eine Reduzierung der Bildung von Verschleißmarken von Vorteil ist.

In besonders einfacher Weise läßt sich eine genaue Ausrichtung des Flachschiebers auf seine Ruhelage mit Hilfe der Schenkelfeder dann erreichen, wenn der Flachschieber und die Ventilplatten die Merkmale der Ansprüche 15 und 16 aufweisen. Ist eine Ausrichtung des Flachschiebers auf eine Ruhelage nicht erforderlich, dann braucht nur die Schenkelfeder weggelassen zu werden.

Der Antrieb des Flachschiebers ist in unterschiedlicher Weise möglich. Beispielsweise könnte er mittels einer Schleppstange erfolgen, welche ihn mit der Antriebsvorrichtung kuppelt. Bei einer bevorzugten Ausführungsform ist jedoch der Flachschieber als Anker zwischen den Polschuhen des Magnetsystems angeordnet. Dies trägt nicht nur zu einer minimalen zu bewegenden Masse bei, sondern auch zu einer Platzersparnis, weil ein zusätzlicher Anker entfällt. Ein derartiger, unmittelbarer Antrieb des zu bewegenden Teiles ist natürlich auch dann von Vorteil, wenn der zu bewegende Teil nicht ein erfindungsgemäß ausgebildeter Flachschieber ist.

Der Flachschieber könnte insgesamt aus einem gut magnetisierbaren Metall bestehen. Bei einer bevorzugten Ausführungsform besteht er jedoch aus einer als Verschlußorgan ausgebildeten inneren Buchse aus einem magnetisch schlecht leitenden oder nicht leitenden Material und einer als Anker und magnetische Abschirmung ausgebildeten äußeren Buchse aus einem gut magnetisierbaren Material. Vor allem dann, wenn man die innere Buchse über die beiden Stirnflächen der äußeren Buchse überstehen läßt, erhält man ein ausgezeichnetes Gleitverhalten. Die Gleitflächen der inneren Buchse werden hierbei nämlich feldfrei gehalten, wodurch eine Anlagerung von ferritischem Abrieb an den Steuerkanten verhindert und damit eine gute Selbstreinigung gewährleistet ist.

Aus Fertigungsgründen ist es zweckmäßig, die beiden Gleitplattenflächen mittels Distanzstücken im gewünschten Abstand voneinander zu halten, da derartige Distanzstücke gemeinsam mit dem Flachschieber bearbeitet werden können. Benötigt das erfindungsgemäße Ventil zusätzlich zu einem Elektromagnetsystem auch ein Permanentmagnetsystem, was beispielsweise für die Selbsthaltung bei einem Impulsbetrieb sowie zur Erzielung eines hohen magnetischen Wirkungsgrades oder einer hohen Leistungsdichte erforderlich sein kann, dann werden diese Distanzstücke vorteilhafterweise durch Flußleitleisten gemäß Anspruch 20 gebildet, zwischen denen der Flachschieber in Leistenlängsrichtung verschiebbar angeordnet ist. Man kann hierdurch in einfacher Weise eine Kompensation der auf den Flachschieber quer zu dessen Bewegungsrichtung wirkenden Magnetkräfte erreichen.

Zu einer raumsparenden Bauweise des Ventils leistet eine Ausbildung gemäß Anspruch 22 einen wesentlichen Beitrag, weil die Mehrfachfunktion derartiger Arretierungsbolzen den Raumbedarf erheblich vermindert. Außerdem reduzieren solche Arretierungsbolzen den Aufwand.

Im folgenden ist die Erfindung anhand von zwei in der Zeichnung dargestellten Ausführungsbeispielen im einzelnen erläutert. Es zeigen
Fig. 1 einen Längsschnitt eines ersten Ausführungsbeispiels,
Fig. 2 einen Schnitt nach der Linie II-II der Figur 1,
Fig. 3 eine schematische Darstellung des zugehörigen Magnetsystems,
Fig. 4 einen Ausschnitt aus einem Längsschnitt eines zweiten Ausführungsbeispiels.

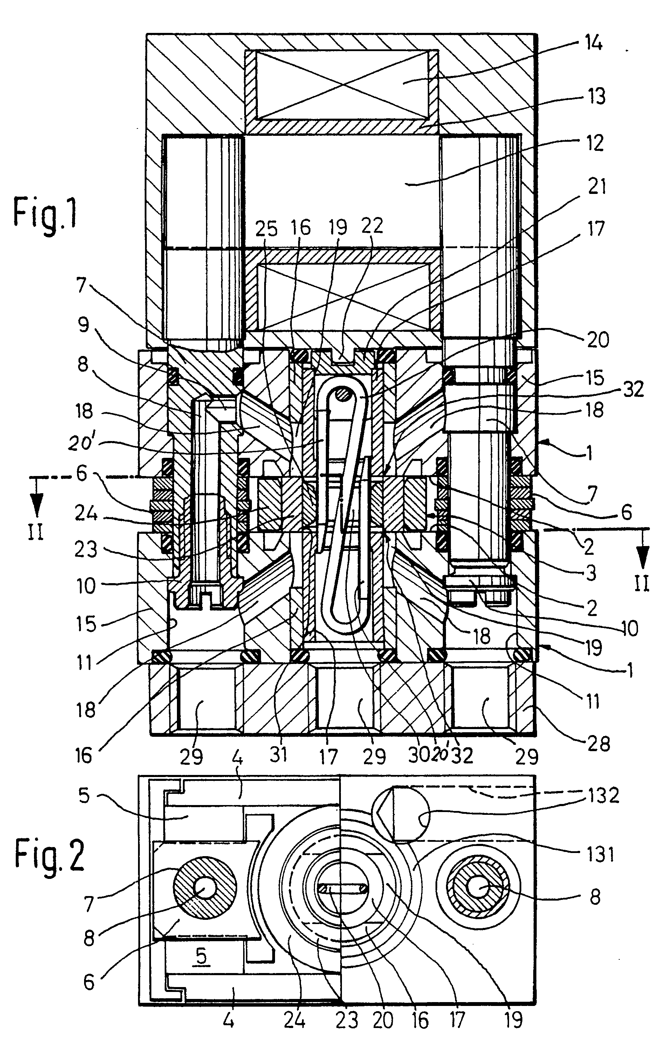

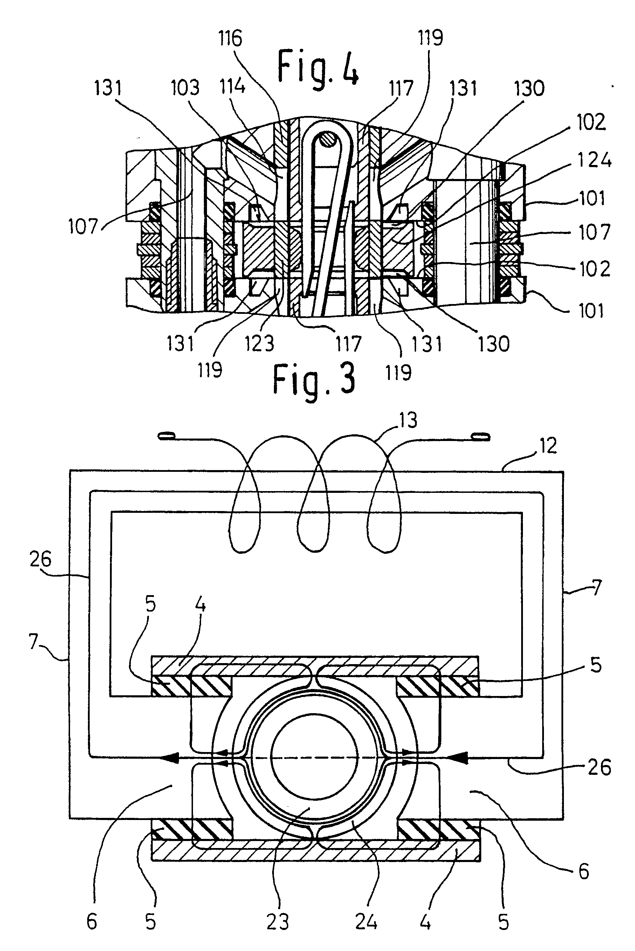

Ein Miniaturmagnetventil, das in einfacher Weise zur Anpassung an unterschiedliche Anforderungen modifiziert werden kann, hat, wie die Figuren 1 und 2 zeigen, im wesentlichen die äußere Form eines Quaders. Zwei baugleich ausgebildete, metallische Ventilplatten 1 mit rechteckförmiger Außenkontur definieren mit ihren einander zugekehrten, planparallel zueinander liegenden Gleitplattenflächen 2 einen Zwischenraum, in dem ein als Ganzes mit 3 bezeichneter Flachschieber angeordnet ist. Die beiden Ventilplatten 1 sind durch zwei gleich ausgebildete und parallel zueinander angeordnete Flußleitleisten 4 (Figur 3) distanziert, an denen die beiden sich in der Verschieberichtung des Flachschiebers 3 erstreckenden Randzonen der Gleitplattenflächen 2 anliegen. Im Bereich der beiden Endabschnitte dieser Flußleitleisten 4 liegt an deren Innenseite je ein Permanentmagnet 5 gleicher Größe und Stärke an. Die Innenseite dieser Permanentmagnete 5 liegt ihrerseits an zwei Polschuhen 6 an, welche durch aufeinander geschichtete Bleche gebildet sind, von denen das mittlere zur Bildung eines Anschlages für den Flachschieber 3 über die anderen Bleche zum gegenüberliegenden Polschuh 6 hin geringfügig übersteht.

Die beiden Polschuhe 6 werden von je einem Arretierungsbolzen 7 durchdrungen, die auch je eine Bohrung der einen Ventilplatte 1 durchdringen und in die mit diesen Bohrungen fluchtenden Durchgangsbohrungen 11 der anderen Ventilplatte 1 eingreifen. Die Arretierungsbolzen 7 sind mit einer zentralen Sacklochbohrung 8 versehen, an die sich eine radial nach innen gerichtete Bohrung 9 anschließt. Die Sacklochbohrung 8 ist im freien Endabschnitt der Arretierungsbolzen 7 zu einer im Durchmesser größeren Gewindebohrung erweitert, in welche eine Hohlschraube 10 eingreift, deren zentrale Durchgangsbohrung den gleichen Durchmesser wie der glatte Teil der Sacklochbohrung 8 hat. Die beiden Hohlschrauben 10 liegen ebenso wie die Arretierunggsbolzen 7 an einer Schulter der sie aufnehmenden Durchgangsbohrungen 11 der Ventilplatten 1 an und spannen die beiden Ventilplatten 1 zusammen.

Mit dem den beiden Hohlschrauben 10 abgewandten Ende der Arretierungsbolzen 7 ist ein in einen Querschlitz der Arretierungsbolzen eingreifender, stabförmiger Jochkörper 12 aus gut magnetisierbarem Material verbunden, dessen Längsachse im rechten Winkel zur Längsachse der Arretierungsbolzen 7 liegt. Der Jochkörper 12 trägt in dem zwischen den Arretierungsbolzen 7 liegenden Bereich einen Spulenkörper 13 mit einer Erregerwicklung 14, deren Anschlüsse nicht dargestellt sind.Die Erregerwicklung 14 kann auch aus zwei getrennten Spulen bestehen.

Die beiden Ventilplatten 1 bestehen aus je einer Trägerplatte 15, die mit einer zentralen Durchgangsbohrung versehen ist, einer in diese Durchgangsbohrung eingesetzten Schlitzbuchse 16 und einer in letztere eingesetzten Steuerbuchse 17. Außer der die beiden Buchsen aufnehmenden Durchgangsbohrung sind die beiden Ventilplatten 1 mit Verbindungsbohrungen 18 versehen, von denen je eine von den Bohrungen 9 und 11 zur Durchgangsbohrung verläuft. Im Ausführungsbeispiel schneidet die Längsachse der Verbindungsbohrungen 18 die Längsachse der zugeordneten Durchgangsbohrung in deren in der Ventilplattenfläche 2 liegender Mündungsöffnung.

Die beiden gleich ausgebildeten Schlitzbuchsen 16 weisen zwei diametral angeordnete, in Umfangsrichtung sich über einen Winkel von etwa 90 Grad erstreckende Steuerschlitze 19 auf, welche zur Gleitplattenfläche 2 hin offen sind und sich von hier aus in axialer Richtung der Schlitzbuchsen 16 so weit erstrecken,daß sie die Mündungsöffnung der in sie einmündenden Verbindungsbohrung 18 überdecken.

Die beiden ebenfalls gleich ausgebildeten Steuerbuchsen 17 liegen spielfrei an der Innenmantelfläche der zugeordneten Schlitzbuchse 16 an und verschließen die Steuerschlitze 19 zur Innenseite hin. Wie bei den Schlitzbuchsen 16 fluchtet auch bei den Steuerbuchsen 17 die dem Flachschieber zugekehrte Stirnfläche mit der Ventilplattenfläche 2. Der dem Flachschieber 3 zugekehrte Endabschnitt der Steuerbuchsen 17 hat einen etwas reduzierten Innendurchmesser. Die hierdurch gebildete koaxial zur Längsachse liegende, zylindrische Innenbundfläche dient als Anlagefläche für die beiden Schenkel einer aus einem Runddraht gebogenen Z-förmigen Schenkelfeder 20, welche den Flachschieber 13 durchgreift und in die beiden Steuerbuchsen 17 hineinragt.

Die Schenkel der Schenkelfeder 20, die auch eine M-Form haben könnte, behalten ihre parallele Lage zueinander beim Auffedern und Zusammengehen. Über die beiden Schenkel ist je ein dünnwandiges Rohr 20′ geschoben. Durch diese Rohre 20′ wird die Auflagefläche vergrößert und eine Geradlinigkeit der Schenkel in einfacher Weise erreicht. Ferner können die Rohre 20′ aus einem anderen Material als die Schenkelfeder bestehen, vorzugsweise aus einem sehr harten Material, oder auch beschichtet sein, um die gewünschten Eigenschaften zu erreichen.

In die der Erregerwicklung 14 benachbarte Steuerbuchse 17 ist ein Stopfen 21 eingesteckt, der einen Querschlitz aufweist, welchen ein Querstift durchdringt. In diesem Querschlitz liegt, den Querstift übergreifend, der eine Bogen der Schenkelfeder 20. Dadurch ist diese so fixiert, daß ihre Mitte auf die Mitte des Flachschiebers 3 und die von der Schenkelfeder 20 definierte Ebene,in welcher sich die beiden Schenkel bewegen, auf die Verschieberichtung des Flachschiebers 3 ausgerichtet sind. Eine Nase 22 an einer zwischen dem Spulenkörper 13 und der ihm zugekehrten Seite der angrenzenden Ventilplatte 1 festgelegten Platte greift in einen Querschlitz des Stopfens 21 ein und hält dadurch diesen in der richtigen Lage.

Der Flachschieber 3 weist einen Drosselring 23 aus einem nicht magnetisierbaren oder magnetisch schlecht leitenden Metall auf. Die axiale Länge des Drosselringes 23 ist gleich der Dicke der beiden Flußleitleisten 4. Daher liegen die beiden planparallelen Stirnflächen des Drosselringes 23 spielfrei an den ihnen zugekehrten Gleitplattenflächen 2 an. Der Innendurchmesser des Drosselringes 23 ist, wie Figur 1 zeigt, genau gleich dem Innendurchmesser der beiden genau gleichachsig angeordneten Schlitzbuchsen 16 und dem Außendurchmesser der ebenfalls genau gleichachsig angeordneten Steuerbuchsen 17.

Der Außendurchmesser der Drosselringe 23 ist so viel größer als der Außendurchmesser der Schlitzbuchsen 16, daß in jeder Stellung des Flachschiebers 3 wenigstens der eine Steuerschlitz 19 der beiden Schlitzbuchsen 16 in der Ventilplattenfläche 2 verschlossen ist.

Den Drosselring 23 umgibt ein Leitring 24 aus einem gut magnetisierbaren Material, dessen Außendurchmesser gleich dem Abstand der beiden Flußleitleisten 4 voneinander ist, so daß der Flachschieber 3 praktisch ohne Spiel zwischen den beiden Flußleitleisten 4 liegt. An den Außendurchmesser des Leitringes 24, über dessen beide Stirnseiten der Drosselring 23 etwas übersteht, ist die Krümmung der dem Flachschieber 3 zugekehrten Polfläche der Polschuhe 6 sowie das Anschlagblech angepaßt, wie Figur 2 zeigt. Die durch die Anschlagfläche begrenzte Verschiebbarkeit des Flachschiebers 3 gegen den einen beziehungsweise anderen Polschuh 6 hin ist relativ zu der radialen Erstreckung der Steuerschlitze 19 so gewählt, daß diese vom Flachschieber 3 freigegeben werden können.

In den Drosselring 23 ist ein Distanzring 25 eingesetzt, weshalb im Ausführungsbeispiel die durch den Innenraum gebildete Durchbruch 30 nicht vollständig durch den Drosselring 23 begrenzt ist, vielmehr die Mantelfläche 31 der Einsenkung 30 in den beiden an die Stirnseiten angrenzenden Endbereichen durch den Drosselring 23, im übrigen durch den Distanzring gebildet ist, dessen Innendurchmesser gleich dem Durchmesser der Ringbundflächen der beiden Steuerbuchsen 17 ist. Hierdurch ist die Schenkelfeder 20 in der Lage, den Flachschieber 3 genau auf diejenige Stellung auszurichten, in welcher die beiden inneren Steuerkanten des Drosselringes 23 mit Nullschnitt auf die durch die beiden Steuerbuchsen 17 gebildeten Steuerkanten ausgerichtet sind. Da eine Teilmenge des zu steuernden Mediums durch den Innenraum des Flachschiebers 3 hindurch strömen muß, endet der Distanzring 25 im Abstand von den beiden Ventilplattenflächen 2, und außerdem bilden die beiden Endabschnitte des vom Distanzring 25 gebildeten Durchgangskanals je einen ausgerundeten Einlauf.

Wie Figur 3 zeigt, verläuft der durch eine Linie 26 angedeutete, durch die Erregerwicklung 14 erzeugte magnetische Fluß vom Jochkörper 12 durch den einen Arretierungsbolzen 7 zum einen Polschuh 6. Von hier aus tritt er in den Leitring 24 über, in dem er sich gleichmäßig aufteilt. Sodann tritt der magnetische Fluß in den anderen Polschuh 6 ein und schließt sich von hier aus über den anderen Arretierungsbolzen 7. Wie Figur 3 ferner zeigt, sind die vier Permanentmagnete 5 so gepolt, daß ihr Fluß durch die eine beziehungsweise andere Flußleitleiste 4 bis zu derjenigen Stelle verläuft, an der der Leitring 24 an den Flußleitleisten 4 anliegt. Wie die zugehörigen Flußlinien zeigen, treten dann die bieden Flüsse aus den Flußleitleisten 4 in den Leitring 24 über, wo sie sich wieder teilen. Sie treten dann in dem den Polschuhen 6 zugekehrten Bereichen in die Polschuhe über und schließen sich dadurch wieder. Durch diesen vollständig symmetrischen Verlauf der durch die Permanentmagnete 5 erzeugten Magnetflüsse kompensieren sich die auf den Flachschieber 3 quer zu seiner Bewegungsrichtung wirkenden Magnetkräfte vollständig. Die Permanentmagnete 5 bewirken deshalb daß der Flachschieber 3 wahlweise in Anlage am einen und am anderen Polschuh 6, genau gesagt dessen Anschlagblech, gehalten werden kann. Durch eine impulsartige Erregung der Erregerwicklung 14 kann der Flachschieber 3 aus dieser Position freigegeben werden, so daß die Schenkelfeder 20 ihn in der Mittelstellung ausrichten kann. Selbstverständlich ist aber auch eine Bewegung des Flachschiebers 3 von der einen in die andere Endstellung mittels eines einzigen Impulses möglich.

An die dem Flachschieber 3 abgewandte Fläche der nicht an den Spulenkörper angrenzenden Ventilplatte 1 schließt sich eine Anschlußplatte 28 an, die mit Anschlußbohrungen 29 für die Anschlußleitungen versehen ist. Die Anschlußbohrungen 29 sind auf die beiden Durchgangsbohrungen 11 sowie auf den Innenraum der angrenzenden Steuerbuchse 17 bzw. der Druckkammer 30 ausgerichtet. Ist beispielsweise an eine der beiden äußeren Anschlußbohrungen 29 ein Druckerzeuger und an die mittlere Anschlußbohrung 29 ein Verbraucher angeschlossen, dann bildet, wenn ferner die andere äußere Anschlußbohrung 29 der Druckentlastung dient, das Ventil ein Dreiwegeventil, das auch als stetiges oder quasi-stetiges Ventil betrieben werden kann. Im letztgenannten Falle ist eine Speisung der Erregerwicklung 10 mit einer Pulsfolge möglich, deren Frequenz und/oder Amplitude und/oder Tastverhältnis veränderbar ist.

Wie Figur 4 zeigt, bedarf es nur einer geringfügigen Abänderung des Ausführungsbeispiels der Figuren 1 bis 3, um ein Vierwege-oder Fünfwege-Ventil zu erhalten. Für ein derartiges Ventil wird der Leitring 24 durch einen Leitring 124 ersetzt, der, wie Figur 4 zeigt, einen etwas kleineren Innendurchmesser als der Leitring 24 hat und außerdem an beiden Stirnseiten mit einer im geringen Abstand vom äußeren Rand beginnenden Vertiefung 130 versehen ist, die sich bis zum innenliegenden Drosselring 123 erstreckt. Die beiden Vertiefungen 130 stehen in der Mittelstellung des Flachschiebers 103 mit Steueröffnungen 131 in den beiden Ventilplattenflächen 102 in Verbindung, die ihrerseits an Verbindungsbohrungen 132 angeschlossen, welche in den beiden Ventilplatten 101 vorgesehen sind und in einer Außenfläche münden. Eine derartige Verbindungsbohrung 132 ist in Figur 2 dargestellt. Auf beiden Stirnseiten des Drosselringes 123 bilden sowohl dessen Innenkante als auch dessen Außenkante je eine Steuerkante. Da der Innendurchmesser des Drosselringes 123 gleich demjenigen der Schlitzbuchsen 116 ist und auch die Außendurchmesser gleich sind ergibt sich in der Mittelstellung des Flachschiebers 103 ein Nullschnitt. Die Steuerschlitze 119 der Schlitzbuchsen 116 haben kreisbogenförmige, konzentrische Schlitzkanten, was eine strenge Linearität zwischen dem Öffnungsgrad und dem Verschiebeweg des Flachschiebers ergibt. Durch die diametrale Lage der Steuerschlitze 119 beider Schlitzbuchsen 116 ergibt sich eine gegensinnige Wirkungsweise, d.h., der eine Steuerschlitz wird in dem Maße freigegeben, in dem der andere geschlossen wird.

Für einen Betrieb als Vierwegeventil oder Fünfwegeventil wird der Druckerzeuger an den mit dem Inneren der Steuerbuchsen 117 in Verbindung stehenden Anschluß und die Verbraucher an die beiden auf die Arretierungsbolzen 107 ausgerichteten Anschlüsse angeschlossen. Die Verbindungsbohrungen 131 dienen dann der Ableitung des Fluids.

Im übrigen ist das Ausführungsbeispiel gemäß Figur 4 wie dasjenige gemäß den Figuren 1 bis 3 ausgebildet, weshalb wegen weiterer Einzelheiten auf die zum ersten Ausführungsbeispiel gemachten Ausführungen Bezug genommen wird.

## Ansprüche

1. Magnetventil für flüssige und gasförmige Medien mit einem Flachschieber (3; 103), der zwischen planparallelen Gleitflächen (2; 102) mit Hilfe elektromagnetischer Kräfte verschiebbar sowie ein durch wenigstens einen stationären Dauermagneten (5) polarisierter Anker ist und mindestens einen zu den Gleitflächen (2; 102) lotrechten Durchbruch (30) hat, dessen Mantelfläche die Wand einer mit wenigstens einer Anschlußbohrung (29) in Verbindung stehenden Druckkammer begrenzt und dessen Ränder (32) Steuerkanten für Steueröffnungen (19) in den Gleitflächen (2; 102) bilden, wobei jede Stirnfläche des Flachschiebers (3; 103) mindestens ein Paar von gegensinnig miteinander korrespondierenden Steueröffnungen (19; 119) gleichzeitig zu überdecken vermag, dadurch gekennzeichnet, daß

    a) jede Steueröffnung (19; 119) die Form eines zum Flachschieber (3; 103) in dessen Mittelstellung konzentrisch verlaufenden Schlitz hat,

    b) in der Mittelstellung des Flachschiebers (3; 103) die radial innenliegenden Begrenzungskanten der Steueröffnungen ( 19; 119) und die Steuerkanten (32) im Flachschieber auf zueinander konzentrischen Kreisen liegen.

2. Magnetventil nach Anspruch 1, dadurch gekennzeichnet, daß der Schieber (3; 103) die Form eines ringförmigen Flachschiebers hat.

3. Magnetventil nach Anspruch 1 oder 2, dadurch gekennzeichnet, daß der Schieber (3; 103) aus mehreren Teilen besteht, davon eines ein rohrförmiger Drosselring (23; 123 ) ist, dessen Planflächen die Schiebergleitflächen sind.

4. Magnetventil nach einem der Ansprüche 1 bis oder 3, gekennzeichnet durch eine gleiche hydraulische Kräfte auf die beiden Stirnseiten des Flachschiebers (3;103) ergebende Ausbildung und Anordnung der Steueröffnungen (19) in den beiden Gleitflächen (2;102).

5. Magnetventil nach einem der Ansprüche 1 bis 4, dadurch gekennzeichnet, daß die beiden Gleitfläche (2, 102) bildende Ventilplatten (1;101) baugleich ausgebildet sind.

6. Magnetventil nach einem der Ansprüche 1 bis 5, dadurch gekennzeichnet, daß die beiden Ventilplatten (1;101) Buchsen (16,17) aufweisen, die in Tragplatten (15) eingesetzt sind und mit ihrer einen Stirnfläche mindestens teilweise die eine beziehungsweise andere Gleitfläche (2;102) bilden.

7. Magnetventil nach Anspruch 3, dadurch gekennzeichnet, daß alle vier Kanten des rohrförmigen Flachschiebers (3;103) Steuerkanten bilden.

8. Magnetventil nach einem der Ansprüche 1 bis 7, dadurch gekennzeichnet, daß die axiale Länge des ringförmigen Flachschiebers (3; 103) gleich der Höhe von die beiden Gleitflächen (2; 102) planparallel haltenden Distanzstücken (4) ist.

9. Magnetventil nach einem der Ansprüche 1 bis 8, gekennzeichnet durch zwei gleichachsig in je einer kreiszylindrischen Bohrung der einen beziehungsweise anderen Ventilplatte (1;101) angeordneten, kreiszylindrischen Schlitzbuchsen (16), deren eine, planparallele Stirnfläche mit der Gleitfläche (2;102) der sie aufnehmenden Ventilplatte fluchtet und deren Wand mit wenigstens einem zu der mit der Gleitfläche fluchtenden Stirnfläche hin offenen Schlitz (19) zur Bildung einer Steueröffnung versehen ist, in die je ein Verbindungskanal (18) mündet.

10. Magnetventil nach Anspruch 9, dadurch gekennzeichnet, daß jede Schlitzbuchse (16) zwei diametral angeordnete Schlitze (19) aufweist.

11. Magnetventil nach Anspruch 9 oder 10, dadurch gekennzeichnet, daß der Innendurchmesser der Schlitzbuchsen (16) gleich dem Durchmesser der Einsenkungsränder (32) des Flachschiebers (3;103) ist.

12. Magnetventil nach einem der Ansprüche 9 bis 11, dadurch gekennzeichnet, daß der Außendurchmesser der Schlitzbuchsen (16) gleich dem Durchmesser der äußeren Steuerkante des rohrförmigen Drosselringes (23; 123) ist.

13. Magnetventil nach einem der Ansprüche 9 bis 12, dadurch gekennzeichnet, daß die Steuerschlitze (19) jeder Schlitzbuchse (16) innen durch die Außenmantelfläche einer in die Schlitzbuchse eingesetzten Steuerbuchse (17;117) verschlossen sind, deren eine Stirnfläche mit der zugeordneten Ventilplattenfläche (2;102) fluchtet und einen Außendurchmesser hat, der gleich dem Durchmesser der Einsenkungsränder (32) des Flachschiebers (3;103) ist.

14. Magnetventil nach einem der Ansprüche 2 bis 13, gekennzeichnet durch eine den ringförmigen Flachschieber (3;103) durchdringende und in die beiden Ventilplatten (1;101) eingreifende Schenkelfeder (20), deren beide Schenkel an diametral liegenden Stellen des Flachschiebers (3;103) anliegen und an den beiden Ventilplatten (1;101) abgestützt sind.

15. Magnetventil nach Anspruch 14, dadurch gekennzeichnet, daß die Schenkelfeder (20) eine Z-Form oder M-Form hat.

16. Magnetventil nach Anspruch 14 oder 15, dadurch gekennzeichnet, daß die Schenkel in je einer Hülse angeordnet sind.

17. Magnetventil nach einem der Ansprüche 14 bis 16, dadurch gekennzeichnet, daß die parallel zueinander liegenden Schenkel der Schenkelfeder (20) über eine zur zylindrischen Anlagefläche des Flachschiebers (3;103) konzentrische Innenmantelfläche wenigstens der einen Steuerbuchse (17) an der Ventilplatte (1;101) abgestützt sind.

18. Magnetventil nach Anspruch 17, dadurch gekennzeichnet, daß der kreiszylindrische Durchbruch des Flachschiebers (3;103) im Bereich der Anlagestellen der Schenkelfeder (20) den gleichen Innendurchmesser hat wie die zylindrische Anlagefläche der beiden Steuerbuchsen (17) für die Schenkelfeder (20).

19. Magnetventil nach einem der Ansprüche 1 bis 18, mit einem vorzugsweise ringförmigen Flachschieber, dadurch gekennzeichnet, daß der Flachschieber (3;103) als Anker zwischen den Polschuhen (6) eines durch wenigstens einen Dauermagnete polarisierten Magnetsystems angeordnet ist.

20. Magnetventil nach einem der Ansprüche 1 bis 19, dadurch gekennzeichnet, daß der Flachschieber (3; 103) die Form eines Ringes hat, der an beiden Stirnflächen wenigstens je eine innere und je eine äußere Steuerkante bildet.

21. Magnetventil nach Anspruch 20, dadurch gekennzeichnet, daß die Steuerkanten beider Stirnflächen des Flachschiebers (103) mit je zwei vorzugsweise gegensinnig wirksam werdender Steuerschlitzen (119) zusammenwirken.

22. Magnetventil nach Anspruch 20 oder 21, dadurch gekennzeichnet, daß die Steuerschlitze (119) kreisbogenförmige, konzentrische Schlitzkanten haben.

23. Magnetventil nach einem der Ansprüche 19 bis 22 dadurch gekennzeichnet, daß der Flachschieber (3;103) einen Drosselring (23;123) aus einem magnetisch schlecht oder nicht leitenden Material und ein ihn umgreifendes Leitstück (24; 124) aus einem gut magnetisierbaren Material aufweist.

24. Magnetventil nach Anspruch 23, dadurch gekennzeichnet, daß der Drosselring (23; 123) über die beiden Stirnflächen des ihn umgreifenden Leitstücks (24;124) übersteht.

25. Magnetventil nach einem der Ansprüche 17 bis 24, dadurch gekennzeichnet, daß der Flachschieber (3;103) zwischen zwei parallel zueinander liegenden Flußleitleisten (4) angeordnet ist, deren Abstand voneinander dem Außenmaß des Flachschiebers (3;103) angepaßt ist und deren Endabschnitte über je einen Permanentmagneten (5) leitend mit den Polschuhen (6) verbunden sind.

26. Magnetventil nach Anspruch 25, dadurch gekennzeichnet, daß die Flußleitleisten (4) durch die Ventilplattenflächen (2; 102) planparallel haltende Distanzstücke gebildet sind.

27. Magnetventil nach einem der Ansprüche 17 bis 26, gekennzeichnet durch zwei Arretierungsbolzen (7), welche die beiden Ventilplatten (1; 102) miteinander verbinden, je einen magnetisch gut leitenden Schenkel von den beiden Polschuhen (6) zu einem wenigstens eine Magnetspule (14) tragenden Joch (12) bilden und mit je einer Längsbohrung (8) versehen sind, welche einerseits mit einem Anschluß (29) und andererseits mit je einem Kanal (18) de von ihnen vollständig durchdrungenen Ventilplatte (1; 101) in Verbindung stehen.

28. Magnetventil nach einem der Ansprüche 17 bis 27, dadurch gekennzeichnet, daß die Polschuhe (6) aus mehreren übereinander liegenden Blechen zusammengesetzt sind, von denen eines auf der dem Flachschieber (3; 103) zugekehrten Seite über die anderen Bleche als Anschlagbblech übersteht.

29. Magnetventil nach Anspruch 2 oder 3, dadurch gekennzeichnet, daß der Flachschieber aus lamellenartig aufeinandergeschichteten Scheiben aus unterschiedlichen Werkstoffen besteht.

30. Magnetventil nach Anspruch 25, dadurch gekennzeichnet, daß Flußleitleiste (4) und Dauermagnete (5) aus einem einstückig geformten dreipoligen Dauermagnet gebildet sind.

**Claims**

1. Solenoid valve for liquid and gaseous media having a flatside valve (3; 103), which may be moved between plane-parallel sliding surfaces (2; 102) by means of electromagnetic forces and is an armature polarised by at least one stationary permanent magnet (5), and has at least one aperture (30), which is vertical to the sliding surfaces (2; 102) and of which the generated surface forms the wall of a pressure chamber which is connected to by at least one connection aperture (29), and the sides (32) of which form control edges for control apertures (19) in the sliding surfaces (2; 102), wherein each end face of the flat-side valve (3; 103) is able to cover simultaneously at least one pair of control apertures (19; 119) which correspond to each other in opposite directions, characterised in that;
   a) each control aperture (19; 119) has the shape of a slit extending concentrically to the flat-side valve (3; 103) in the central position thereof;
   b) when the flat-side valve (3; 103) is in its central position, the radially inner delimiting edges of the control apertures (19; 119) and the control edges (32) lie in circles concentric to one another in the flat-sided valve.

2. Solenoid valve according to claim 1, characterised in that the valve (3; 103) has the form of an annular flat-side valve.

3. solenoid valve according to claim 1 or 2. characterised in that the valve (3; 103) consists of a plurality of parts, of which one is a tubular throttle ring (23; 123), the plane surfaces of which are also the sliding surfaces of the valve.

4. Solenoid valve according to one of claims 1 to 3, characterised by a construction and arrangement of the control apertures (19) in the two sliding surfaces (2; 102), generating equal hydraulic forces on both front faces of the flat-side valve (3; 103).

5. Solenoid valve according to one of claims 1 to 4, characterised in that the two valve plates (1; 101) forming the sliding surfaces (2; 102) are formed in an identical manner.

6. Solenoid valve according to one of claims 1 to 5, characterised in that the two valve plates (1; 101) comprise bushes (16; 17) which are inserted in carrier plates (15) and form with their front sides, at least part of one or other sliding surface (2; 102).

7. solenoid valve according to claim 3, characterised in that all four edges of the tubular flat-side valve (3; 103) form control edges. .

8. Solenoid valve according to one of claims 1 to 7 characterised in that the axial length of the annular flat-side valve (3; 103) is equal to the height of distance parts (4) holding the two sliding surfaces in a plane parallel manner.

9. Solenoid valve according to one of claims 1 to 8. characterised by two circular cylindrical slotted bushes (16) of which each is coaially disposed in a circular cylindrical bore in one or other of the valve plates (1:101) and of which one, plane-parallel, end face is aligned with the sliding surface (2; 102) of the valve plate accommodating it, and of which the wall is provided with at least one slot (19) which is open towards the front face which is aligned with the sliding surface, to form a control opening, into which one connection channel (18) opens in each case.

10. Solenoid valve according to claim 9, characterised in that each slotted bush (16) has two diametrically disposed slots (19).

11. solenoid valve according to claim 9 or 10, characterised in that the inner diameter of the slotted bushes (16) is equal to the diameter of the countersunk edges (32) of the flat-side valve (3; 103).

12. solenoid valve according to one of claims 9 to 11, characterised in that the external diameter of the slotted bushes (16) is the same as the diameter of the external control edge of the tubular throttle ring (23; 123).

13. solenoid valve according to one of claims 9 to 12. characterised in that the control slots (19) of each slotted bush (16) are closed on the inside by the outer generated surface of a control bush (17; 117) inserted in the slotted bush. one surface of which control bush is aligned with the associated valve plate surface (2; 102) and has an external diameter which is the same as the diameter of the countersunk edges (32) of the flat-side valve (3; 103).

14. solenoid valve according to one of claims 2 to 13. characterised by a leg spring (20) which penetrates the annular flat-side valve (3; 103) engages into both valve plates (1; 101) and of which the two legs abut at diametrical locations on the flat-side valve (3; 103) and are supported on the two valve plates (1; 101).

15. Solenoid valve according to claim 14, characterised in that the leg spring (20) is Z-shaped or M-shaped.

16. solenoid valve according to claim 14 or 15, characterised in that the legs are each positioned in a casing.

17. Solenoid valve according to one of claims 14 to 16. charactersied in that the logs of the leg spring (20), which are parallel to one another, are supported on the valve plate (1; 101) by an inner generated surface of at least one control bush (17), which surface is concentric with respect to the cylindrical abutment surface of the flat-side valve (3; 103).

18. Solenoid valve according to claim 17, characterised in that the circular cylindrical aperture of the flat-side valve (3; 103) has, in the vicinity of the abutment points of the leg spring (20), the same internal diameter as the cylindrical support surface of both the control bushes (17) for the lever spring (20).

19. Solenoid valve according to one of claims 1 to 18. having an advantageously annular flat-side valve, characterised in that the flat-side valve (3; 103) is located as an armature between the pole shoes (61 of a magnet system which is polarised by at least one permanent magnet.

**20.** Solenoid valve according to one of claim 1 to 19, characterised in that the flat-side valve (3; 103) has the form of a ring which forms on both front faces, at least one internal and one external control edge in each case.

**21.** Solenoid valve according to claim 20, characterised in that the control edges of both front faces of the flat-side valve (103) cooperate with two advantageously oppositely acting control slots (119) in each case.

**22.** Solenoid valve according to claim 20 or 21, characterised in that the control slots (119) have arc-shaped concentric slot edges.

**23.** Solenoid valve according to one of claims 19 to 22 characterised in that the flat-side valve (3; 103) has a throttle ring [23; 123) of magnetically poor or non-conductive material and a conductor element (24, 124) which surrounds the ring and is made of a material which can be magnetised well.

**24.** Solenoid valve according to claim 23, characterised in that the throttle ring (23; 123) projects above the two front faces of the conductor element (24; 124) which surround the latter.

**25.** Solenoid valve according to one of claims 17 to 24, characterised in that the flat-side valve (3; 103) is arranged between two forward conducting strips (4), which are parallel to each other, and of which the distance from each other is adapted to the outer dimension of the flat-side valve (3; 103) and of which the ends are conductively connected via one permanent magnet (5) to the pole shoes (6).

**26.** solenoid valve according to claim 25, characterised in that the forward conducting strips [4) are framed by supports holding the valve plate surfaces (2; 102) in a plane-parallel manner.

**27.** Solenoid valve according to one of claims 17 to 26, characterised by two locking bolts (7), which connect the two valve plates (1; 102) to each other, each form a leg with good magnetic conductivity from the two pole shoes (6) to a yoke (12), bearing at least one magnetic coil (14), and are each equipped with a longitudinal aperture (8), which are connected, on the one hand to a connection (29) and on the other hand to one channel (18) in each case of the valve plate (1; 101) which is completely penetrated thereby.

**28.** solenoid valve according to one of claims 17 to 27, characterised in that the pole shoes (6) are comprised of a plurality of superposed sheets, of which one sheet, on the side facing the flat-side valve (3; 103) projects above the other shoots as an abutment sheet.

**29.** Solenoid valve according to claim 2 or 3, characterised in that the flat-aide valve consists of sheets of different materials stacked on top of each other in a laminated manner.

**30.** Solenoid valve according to claim 25, characterised in that the forward conducting strip (4) and permanent magnet (5) consist of a three-pole permanent magnet which is formed as an integral piece.

## Revendications

**1.** Electrovanne pour fluides liquides et gazeux, comprenant un tiroir plan (3 ; 103) qui est déplaçable entre deux surfaces de glissement (2 ; 102) planes et parallèles au moyen de forces électromagnétiques, qui constitue un induit polarisé par au moins un aimant permanent stationnaire (5) et qui comporte au moins une traversée (30) qui est perpendiculaire aux surfaces de glissement (2 ; 102), dont la surface de l'enveloppe délimite la paroi d'une chambre sous pression communiquant avec au moins un trou de raccordement (29) et dont les bords (32) forment des arêtes de commande pour des lumières de commande (19) situées dans les surfaces de glissement (2 ; 102), chaque surface latérale du tiroir plan (3 ; 103) étant à même de recouvrir simultanément au moins une paire de lumières de commande (19 ; 1 19) qui sont en correspondance l'une avec l'autre en sens inverses, caractérisée en ce que:
    a) chaque lumière de commande (19 ; 119) a la forme d'une fente qui est concentrique au tiroir plan (3; 103) en position médiane ;
    b) lorsque le tiroir plan (3 ; 103) est en position médiane, les arêtes radialement intérieures délimitant les lumières de commande (19 ; 119) et les arêtes de commande (32) situées dans le tiroir plan sont sur des cercles concentriques.

**2.** Electrovanne selon la revendication 1, caractérisée en ce que le tiroir (3; 103) a la forme d'un tiroir plan annulaire.

3. Electrovanne selon la revendication 1 ou 2, caractérisée en ce que le tiroir (3 ; 103) est en plusieurs parties dont l'une est un anneau d'étranglement tubulaire (23 ; 123) dont les surfaces planes sont les surfaces de glissement du tiroir.

4. Electrovanne selon l'une des revendications 1 à 3, caractérisée par une conformation et une disposition des lumières de commandes (19) réalisées dans les deux surfaces de glissement (2 ; 102) dont il résulte des forces hydrauliques égales sur les deux faces latérales du tiroir plan (3 ; 103)

5. Electrovanne selon l'une des revendications 1 à 4, caractérisée en ce que les deux plateaux de la vanne (1, 101) formant les surfaces de glissement (2 ; 102) sont construits de manière identique.

6. Electrovanne selon l'une des revendications 1 à 5, caractérisée en ce que les deux plateaux de vanne (1 ; 101) comprennent des manchons (16, 17) logés dans des plaques de support (15) et dont l'une des surfaces extrêmes forme au moins partiellement l'une ou l'autre des surfaces de glissement (2; 102).

7. Electrovanne selon la revendication 3, caractérisée en ce que toute les quatre arêtes du tiroir plan tubulaire (3, 103) forment des arêtes de commande.

8. Electrovanne selon l'une des revendications 1 à 7, caractérisée en ce que la longueur axiale du tiroir plan tubulaire (3 ; 103) est égale à la hauteur d'entretoises (4) qui maintiennent les deux surfaces de glissement (2; 102) planes et parallèles.

9. Electrovanne selon l'une des revendications 1 à 8, caractérisée par deux manchons co-axiaux à fentes (16) qui sont cylindriques de révolution et dont chacun est disposé dans un trou cylindrique de révolution de l'un et respectivement de l'autre plateau de vanne (1 ; 101), l'une des surfaces extrêmes planes et parallèles de chacun de ces manchons étant à l'alignement de la surface de glissement (2 ; 102) du plateau qui le loge et sa paroi comportant au moins une fente (19) ouverte sur la surface extrême alignée sur la surface de glissement de manière à former une lumière de commande dans chacune desquelles débouche un canal de liaison (18).

10. Electrovanne selon la revendication 9, caractérisée en ce que chaque manchon à fentes (16) comporte deux fentes (19) disposées diamétralement.

11. Electrovanne selon la revendication 9 ou 10, caractérisée en ce que le diamètre interne des manchons à fentes (16) est égal au diamètre des bords des cavités (32) du tiroir plan (3; 103).

12. Electrovanne selon l'une des revendications 1 à 1 1, caractérisée en ce que le diamètre extérieur des manchons à fentes (16) est égal au diamètre des arêtes extérieures de commande de l'anneau tubulaire d'étranglement (23; 123).

13. Electrovanne selon l'une des revendications 9 à 12, caractérisée en ce que les fentes de commande (19) de chaque manchon correspondant (16) sont obturées intérieurement par la surface de l'enveloppe extérieure d'un manchon de commande (17 ; 1 17) enfilé dans le manchon à fentes et dont l'une des surfaces extrêmes est à l'alignement de la surface correspondante (2 ; 102) du plateau de la vanne, le diamètre extérieur du manchon de commande étant égal au diamètre des bords des cavités (32) du tiroir plan (3 ; 103).

14. Electrovanne selon l'une des revendications 2 à 13, caractérisée par un ressort à branches (20) passant à travers le tiroir plan tubulaire (3; 103) et pénétrant dans les deux plateaux de la vanne ( (1 ; 101), les deux branches de ce ressort étant appliquées contre des emplacements situés diamétralement du tiroir plan (3 ; 103) et prenant appui contre les deux plateaux (1 ; 101) de la vanne.

15. Electrovanne selon la revendication 14, caractérisée en ce que le ressort à branches (20) à une forme en Z ou en M.

16. Electrovanne selon la revendication 14 ou 15, caractérisée en ce que chacune des branches est disposée dans une douille.

17. Electrovanne selon l'une des revendications 14 à 16, caractérisée en ce que les branches, disposées parallèlement, du ressort (20) prennent appui contre le plateau de la vanne (1 ; 101) par l'intermédiaire de la surface intérieure de l'enveloppe d'au moins l'un des manchons de commande (17), cette surface intérieure de l'enveloppe du manchon étant concentrique à la surface cylindrique d'appui de ce ressort contre le tiroir plan (3; 103).

18. Electrovanne selon la revendication 17 caractérisée en ce que la traversée cylindrique de révolution du tiroir plan (3; 103) dans la région des lieux d'appui du ressort à branches (20), le même diamètre intérieur que la surface cylindrique d'appui des deux manchons de commande (17) qui est destinée au ressort à branches (20).

19. Electrovanne selon l'une des revendications 1 à 18 comprenant un tiroir plan de préférence annulaire, caractérisée en ce que le tiroir plan (3 ; 103) est disposé sous forme d'induit entre les pièces polaires (6) d'un système magnétique polarisé par au moins un aimant permanent.

20. Electrovanne selon l'une des revendications 1 à 19, caractérisée en ce que le tiroir plan (3 ; 103) a la forme d'un anneau dont chacune des deux surfaces extrêmes forme au moins une arrête intérieure et une arrête extérieure de commande.

21. Electrovanne selon la revendication 20, caractérisée en ce que les arêtes de commande des deux surfaces extrêmes du tiroir plan (3 ; 103) coopèrent chacune avec deux fentes de commande (119) entrant avantageusement en action en sens inverses.

22. Electrovanne selon la revendication 20 ou 21, caractérisée en ce que les fentes de commande (119) ont des arêtes concentriques en arcs de cercle.

23. Electrovanne selon l'une des revendications 19 à caractérisée en ce que le tiroir plan (3 ; 103) comprend un anneau d'étranglement (23 ; 123) en matériau mauvais conducteur ou non conducteur du magnétisme et une pièce conductrice (24 ; 124) qui entoure ce dernier et qui est en matériau bien magnétisable.

24. Electrovanne selon la revendication 23 caractérisée en ce que l'anneau d'étranglement (23 ; 1 23) est en saillie sur les deux surfaces extrêmes de la pièce conductrice (24; 124) qui l'entoure.

25. Electrovanne selon l'une des revendications 17 à 24, caractérisée en ce que le tiroir plan (3 ; 103) est disposé entre deux barreaux parallèles (4) conducteurs de flux, dont la distance qui les sépare est adaptée à la cote extérieure du tiroir plan (3 ; 103) et dont les parties extrêmes sont chacune connectées aux pièces polaires (6) par un aimant permanent (5).

26. Electrovanne selon la revendication 25, caractérisée en ce que les barreaux conducteurs de flux (4) sont formés par des pièces d'entretoisement qui maintiennent les surfaces (2 ; 102) des plateaux de la vanne planes et parallèles.

27. Electrovanne selon l'une des revendications 17 à 26, caractérisée par deux goujons de blocage (7) qui relient l'un à l'autre les deux plateaux (1 ; 101) de la vanne et dont chacun forme une branche magnétiquement bien conductrice entre les deux pièces polaires (6) et une culasse (12) supportant au moins un enroulement inducteur (14), chacun desdits goujons de blocage (7) comportant un trou longitudinal (8) communiquant d'une part avec un raccord (29) et d'autre part avec un canal ( 18) réalisé dans le plateau (1 ; 101) qui est entièrement traversé par lui.

28. Electrovanne selon l'une des revendications 17 à 27, caractérisée en ce que les pièces polaires (6) sont formées d'un empilement de tôles dont l'une est en saillie par rapport aux autres du côté tourné vers le tiroir plan (3 ; 103) et forme une butée pour ce dernier.

29. Electrovanne selon la revendication 2 ou 3, caractérisée en ce que le tiroir plan est en forme de plaquettes empilées à la manière de lamelles et réalisées en des matériau différents.

30. Electrovanne selon la revendication 25, caractérisée en ce que les barreaux (4) conducteurs de flux et les aimants permanents (5) sont formés d'un aimant permanent tripolaire monobloc.

**Fig.1**

**Fig.2**

Fig. 4

Fig. 3